# EUROPÄISCHE PATENTSCHRIFT

(11) **EP 0 980 998 B1**
(45) Veröffentlichungstag und Bekanntmachung des Hinweises auf die Patenterteilung: **17.08.2005**
(21) Anmeldenummer: 99112871.1
(22) Anmeldetag: 03.07.1999
(51) Int. Cl.: F16J 15/32

(54) **Radialwellendichtring**
Radial shaft seal
Joint à lèvre radiale

(30) Priorität: 14.08.1998 DE 19836986
(43) Veröffentlichungstag der Anmeldung: 23.02.2000
(73) Patentinhaber: Carl Freudenberg KG, 69469 Weinheim (DE)
(72) Erfinder: Hugnagel, Werner, 72663 Grossbettlingen (DE); Guth, Wolfgang, Dr., 69514 Laudenbach (DE)

(56) Entgegenhaltungen:
- EP-A- 0 754 892
- EP-A- 0 895 009
- DE-A- 19 539 057
- US-A- 5 615 894

## Beschreibung

### Technisches Gebiet

Die Erfindung betrifft einen Radialwellendichtring mit den Merkmalen aus dem Oberbegriff von Anspruch 1.

### Stand der Technik

Ein solcher Radialwellendichtring ist aus der Zeitschrift ATZ, 1998, Nr. 7, 8, System Partners 98, Seiten 28 bis 32 bekannt.

Ein weiterer Radialwellendichtring ist aus der DE 195 39 057 A1 bekannt. Der vorbekannte Radialwellendichtring umfaßt einen Stützring und weist eine sich im wesentlichen in radialer Richtung erstreckende, kreisringförmige Dichtscheibe aus einem elastisch deformierbaren Werkstoff auf, wobei der Stützring und die Dichtscheibe miteinander verbunden sind. Die Dichtscheibe ist radial innenseitig in Richtung eines abzudichtenden Raums vorwölbbar und in axialer Richtung einerseits auf der dem abzudichtenden Raum abgewandten Seite zur Rückförderung von Leckflüssigkeit in den abzudichtenden Raum bei Rotation der abzudichtenden Welle in einer ersten Drehrichtung mit einer ersten Oberflächenprofilierung versehen, die unter radialer Vorspannung dichtend an die Welle anlegbar ist. Die Dichtscheibe ist auf der der ersten Oberflächenprofilierung abgewandten Seite zur Rückförderung von Leckflüssigkeit in den abzudichtenden Raum bei Rotation der Welle in einer der ersten Drehrichtung entgegengesetzten zweiten Drehrichtung mit einer zweiten Oberflächenprofilierung versehen, wobei die Dichtscheibe radial innenseitig in axialer Richtung beiderseits vorwölbbar ist und wobei die zweite Oberflächenprofilierung unter radialer Vorspannung ebenfalls dichtend an die Welle anlegbar ist. Die Aufgabe, die dem vorbekannten Radialwellendichtring zugrunde liegt, wird darin gesehen, daß zwei identisch ausgebildete Radialwellendichtringe die einander in axialer Richtung entgegengesetzten Enden einer Welle abzudichten vermögen, wobei jeder der Radialwellendichtringe eine Förderwirkung des abzudichtenden Mediums in Richtung des abzudichtenden Raums bewirken soll. In wirtschaftlicher Hinsicht ist die Ausgestaltung des vorbekannten Radialwellendichtrings besonders vorteilhaft, da beide Drehrichtungen der Welle durch einen identischen Radialwellendichtring abdichtbar sind. Dazu ist die Dichtscheibe mit übereinstimmenden ersten und zweiten Oberflächenprofilierungen versehen.

Aus der US 5,615,894 ist ein Radialwellendichtring mit einer Dichtscheibe aus polymerem Werkstoff bekannt, die radial innenseitig axial in Richtung eines abzudichtenden Raums vorgewölbt ist und eine abzudichtende Welle umfangsseitig dichtend umschließt, wobei die Dichtscheibe auf der der Welle zugewandten Seite eine erste und auf der der Welle abgewandten Seite eine zweite Oberflächenprofilierung aufinreist, wobei die erste Oberflächenprofilierung durch sägezahnförmige Ausnehmungen gebildet ist, die einander axial mit Abstand benachbart zugeordnet sind und wobei die dem abzudichtenden Raum zugewandten ersten Begrenzungsflächen der Ausnehmungen mit der Welle einen kleineren Winkel einschließen, als die dem abzudichtenden Raum abgewandten zweiten Begrenzungsflächen der Ausnehmung, wobei die zweite Oberflächenprofilierung durch auf der der Welle abgewandten Seite offene Ausnehmungen gebildet ist, die einander mit axialem Abstand benachbart zugeordnet sind. Die ersten Begrenzungsflächen sind, im Schnitt betrachtet, entlang ihrer gesamten Erstreckung geradlinig ausgebildet, wobei der Winkel, den die Begrenzungflächen mit der abzudichtenden Welle einschließen, jeweils etwa 55° beträgt.

Der Erfindung liegt die Aufgabe zugrunde, einen Radialwellendichtring der eingangs genannten Art derart weiterzuentwickeln, daß einerseits eine gute Rückförderwirkung des abzudichtenden Mediums in Richtung des abzudichtenden Raums gewährleistet ist und daß die Dichtscheibe andererseits, zum Ausgleich von Rundlaufabweichungen der abzudichtenden Welle in radialer Richtung besonders flexibel ist. Reibungswärme soll gut aus der Dichtscheibe abgeführt werden.

Diese Aufgabe wird erfindungsgemäß mit den Merkmalen von Anspruch 1 gelöst. Auf vorteilhafte Ausgestaltungen nehmen die Unteransprüche bezug.

### Darstellung der Erfindung

Zur Lösung der Aufgabe ist es vorgesehen, daß die Begrenzungsfläche in zwei ebenen Teilflächen unterteilt ist und daß die Teilflächen mit der abzudichtenden Welle voneinander abweichende Winkel einschließen. Das sägezahnförmige Profil der ersten Oberflächenprofilierung hat den Vorteil, daß während der bestimmungsgemäßen Verwendung des Radialwellendichtrings abzudichtendes Medium ausgezeichnet in Richtung des abzudichtenden Raums zurückgefördert wird. Durch das im Vergleich zu Einschnitten deutlich größere Volumen der sägezahnförmigen Ausnehmungen, sind diese besonders gut zur Aufnahme von Verunreinigungen aus dem abzudichtenden Medium, beispielsweise zur Aufnahme von Ölkohle geeignet. Verunreinigungen werden durch die Aufnahme in den Ausnehmungen aus dem Ölkreislauf entfernt, so daß die Gefahr einer Beschädigung des Dichtbereichs der Dichtscheibe auf ein Minimum begrenzt ist.

Die sägezahnförmigen Ausnehmungen auf der der Welle zugewandten und die U-förmigen Ausnehmungen auf der der Welle abgewandten Seite der Dichtscheibe bewirken, daß die Dichtscheibe in radialer Richtung sehr flexibel ist und den Bewegungen der abzudichtenden Welle, auch bei Rundlaufabweichungen, zu folgen vermag. Außerdem bewirken die U-förmigen in Verbindung mit den sägezahnförmigen Ausnehmungen eine sehr große Oberfläche, die gut geeignet ist, die entstehende Reibungswärme rasch aus der Dichtscheibe abzuführen.

Bevorzugt besteht die Dichtscheibe aus PTFE. Die Dichtscheibe ist dadurch gegen die meisten abzudichtenden Medien resistent. Außerdem weist PTFE eine gute Temperaturbeständigkeit auf, ebenso wie ein gutes Gleitverhalten. Eine Dichtscheibe aus PTFE ist nahezu verschleißfrei, da nach einem gewissen Anfangsverschleiß die Oberfläche glasiert und dadurch sehr widerstandsfähig wird.

Beispielsweise können spritzgießbare Copolymerisate zur Anwendung gelangen wie FEP (Perfluorethylenpropylen) oder PFA (Perfluoralcoxy Copolymer) oder ein thermoplastisches Elastomer.

Die Dichtscheibe kann jedoch auch aus anderen Werkstoffen bestehen.

Die Dichtscheibe weist bevorzugt eine Dicke von 0,5 bis 1 mm auf. Die Gebrauchseigenschaften sind besonders vorteilhaft, wenn die Dicke 0,6 bis 0,75 mm, je nach Durchmesser der abzudichtenden Welle, beträgt. Ist die Dicke der Dichtscheibe geringer als 0,5 mm ist von Nachteil, daß die Ausnehmungen in ihrer Tiefe reduziert werden müssen und die Dichtscheibe dadurch nur noch eine sehr geringe Steifigkeit aufweist.

Beträgt die Dicke der Dichtscheibe demgegenüber mehr als 1 mm, ist von Nachteil, daß die Dichtscheibe die Welle mit zu großer Vorspannung anliegend umschließt, wodurch eine sehr große Verlustleistung bedingt ist.

Die sägezahnförmigen und/oder U-förmigen Ausnehmungen sind bevorzugt ohne Werkstoffentnahme in die Dichtscheibe eingeprägt. Dadurch, daß die Ausnehmungen unter Vermeidung spanabhebender Bearbeitungsverfahren hergestellt werden, ist von Vorteil, daß die Dichtscheibe auch bei Rundlaufabweichungen der abzudichtenden Welle einer sehr hohen Anzahl von Lastwechseln ohne Beschädigungen standhält, da die Kerbwirkungen im Bereich der Ausnehmungen im Vergleich zu spanabhebenden Bearbeitungsverfahren deutlich reduziert sind.

Die sägezahnförmigen und U-förmigen Ausnehmungen sind einander bevorzugt auf Lücke zugeordnet. Durch eine derartige Ausgestaltung wird einerseits eine annähernd übereinstimmende Materialstärke entlang der axialen Erstreckung der Dichtscheibe bewirkt; unerwünschte Materialanhäufungen, die in fertigungstechnischer Hinsicht und im Hinblick auf gute Gebrauchseigenschaften nachteilig sind, werden durch eine derartige Ausgestaltung vermieden. Andererseits befinden sich die Gelenkpunkte zwischen den sägezahnförmigen Ausnehmungen, so daß die geometrischen Ambessungen der sägezahnförmigen Ausnehmungen auch dann weitgehend erhalten bleiben, wenn die Dichtscheibe zur Abdichtung von unrund laufenden Wellen eingesetzt wird.

Das Verhältnis der radialen Tiefe der U-förmigen Ausnehmungen zur radialen Tiefe der sägezahnförmigen Ausnehmungen kann 1 bis 4,5, bevorzugt 3 betragen. Durch ein derartiges Verhältnis wird ein ausgezeichneter Kompromiß zwischen einer guten Flexibilität der Dichtscheibe in radialer Richtung zum Ausgleich von Rundlaufabweichungen der Welle, guter Abdichtung des abzudichtenden Mediums während einer langen Gebrauchsdauer und großer Oberfläche zur Kühlung der Dichtscheibe und Abfuhr von Reibungswärme erzielt.

### Kurzbeschreibung der Zeichnungen

Ein Ausführungsbeispiel des erfindungsgemäßen Radialwellendichtrings wird nachfolgend anhand der Figuren näher erläutert. Diese zeigen, jeweils in schematischer Darstellung:
- Figur 1:: Ein Ausführungsbeispiel eines erfindungsgemäßen Radialwellendichtrings, der eine abzudichtende Welle dichtend umschließt,
- Figur 2:: die Einzelheit x aus Figur 1 in vergrößerter Darstellung

### Ausführung der Erfindung

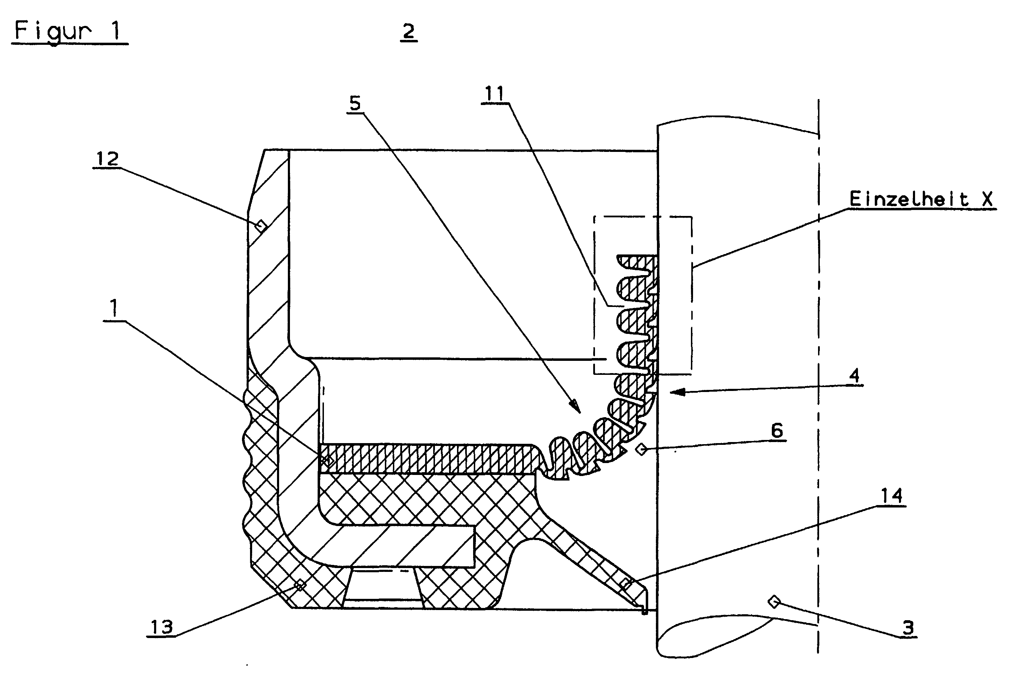

In Figur 1 ist ein Ausführungsbeispiel eines erfindungsgemäßen Radialwellendichtrings gezeigt, der einen Stützkörper 12 aus einem zäh-harten Werkstoff umfaßt, wobei der Stützkörper 12 in diesem Ausführungsbeispiel aus einem metallischen Werkstoff besteht. Mit dem Stützkörper 12 ist die statische Dichtung 13 und die dynamisch beanspruchte Vorschaltdichtung 14 durch Vulkanisation verbunden. In diesem Ausführungsbeispiel ist die statische Dichtung 13 einstückig ineinander übergehend und materialeinheitlich mit der Vorschaltdichtung 14 ausgeführt. Die Vorschaltdichtung 14 umschließt die abzudichtende Welle 3 unter elastischer, radialer Vorspannung dichtend.

Auf der dem abzudichtenden Raum 2 zugewandten Seite ist der elastomere Werkstoff mit der aus PTFE bestehenden Dichtscheibe 1 verbunden, wobei die Dichtscheibe 1 radial innen axial in Richtung des abzudichtenden Raums 2 vorgewölbt ist. Die Dichtscheibe 1 ist auf der der Welle zugewandten und auf der der Welle 3 abgewandten Seite mit jeweils einer Oberflächenprofilierung 4, 5 versehen, wobei die der Welle 3 zugewandte, erste Oberflächenprofilierung 4 sägezahnförmige Ausnehmungen 6 aufweist. Diese sägezahnförmigen Ausnehmungen 6 erstrecken sich vom axial vorgewölbten Bereich der Dichtscheibe 1 bis zum Bereich der Festlegung am elastomeren Werkstoff. Zwischen jeder sägezahnförmigen Ausnehmung 6 ist auf der der Welle abgewandten Seite eine im wesentlichen U-förmige, radial nach außen offene Ausnehmung 11 vorgesehen, durch die die zweite Oberflächenprofilierung 5 gebildet ist. Die beiden Oberflächenprofilierungen 4, 5 sind jeweils schraubengangförmig ausgebildet.

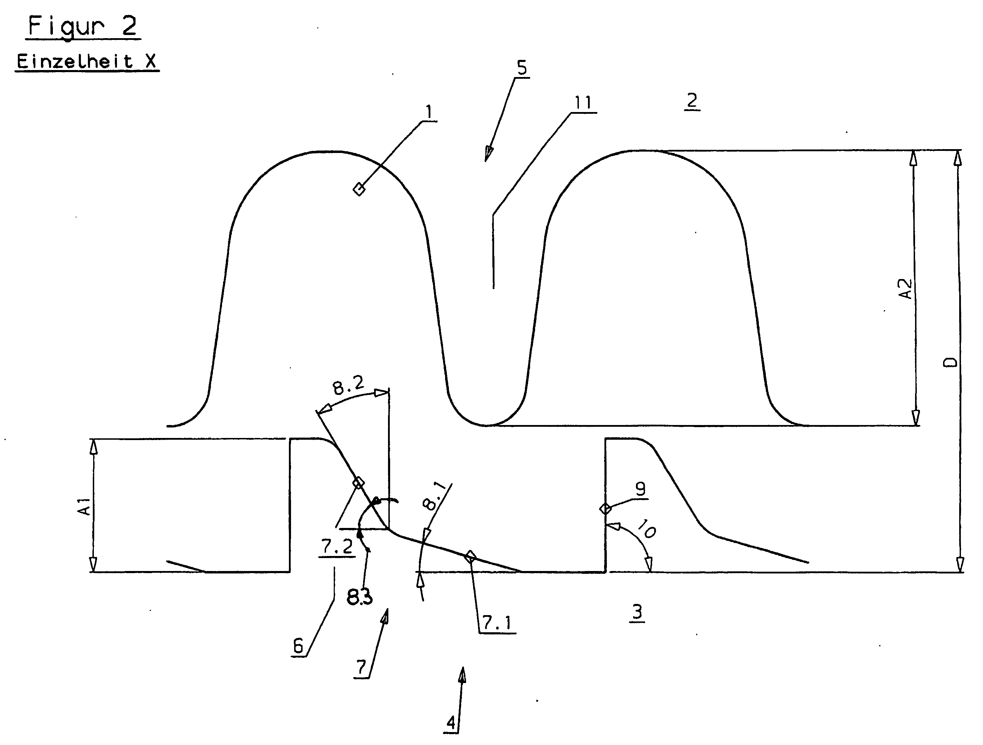

In Figur 2 ist die Einzelheit x aus Figur 1 in vergrößertem Maßstab gezeigt. Die sägezahnförmigen Ausnehmungen 6 der ersten Oberflächenprofilierung 4 sind einander mit axialem Abstand benachbart zugeordnet. Die dem abzudichtenden Raum 2 zugewandte Begrenzungsfläche 7 ist in diesem Ausführungsbeispiel in zwei Teilflächen 7.1, 7.2 unterteilt, die mit der abzudichtenden Welle 3 voneinander abweichende Winkel 8.1, 8.3 einschließen. Der Winkel 8.1 beträgt in diesem Ausführungsbeispiel 15°, der Winkel 8.2 32°. In jedem Fall sind die beiden Winkel 8.1, 8.2 kleiner als der Winkel 10, den die dem abzudichtenden Raum 2 abgewandte zweite Begrenzungsfläche 9 mit der abzudichtenden Welle 3 einschließt. Der Winkel 10 beträgt 90°.

In Abhängigkeit vom Durchmesser der abzudichtenden Welle 3 beträgt die Dicke D der Dichtscheibe 1 bevorzugt zwischen 0,6 und 0.75 mm. Die sägezahnförmigen Ausnehmungen 6 und die U-förmigen Ausnehmungen 11 sind einander auf Lücke zugeordnet, wobei das Verhältnis der radialen Tiefe A2 der U-förmigen Ausnehmungen 11 zur radialen Tiefe A1 der sägezahnförmigen Ausnehmungen 6 in diesem Ausführungsbeispiel drei beträgt.

## Patentansprüche

1. Radialwellendichtring mit einer Dichtscheibe (1) aus polymerem Werkstoff, die radial innenseitig axial in Richtung eines abzudichtenden Raums (2) vorgewölbt ist und eine abzudichtende Welle (3) umfangsseitig dichtend umschließt, wobei die Dichtscheibe (1) auf der der Welle (3) zugewandten Seite eine erste (4) und auf der der Welle (3) abgewandten Seite eine zweite Oberflächenprofilierung (5) aufweist, wobei die erste Oberflächenprofilierung (4) durch sägezahnförmige Ausnehmungen (6) gebildet ist, die einander axial mit Abstand benachbart zugeordnet sind, wobei die dem abzudichtenden Raum (2) zugewandten, sich nicht - achsparallel erstreckenden ersten Begrenzungsflächen (7.1, 7.2) der Ausnehmungen (6) mit der Welle (3) einen kleineren Winkel (8.1, 8.3) einschließen, als die dem abzudichtenden Raum (2) abgewandten sich nicht - achsparallel erstreckenden zweiten Begrenzungsflächen (9) der Ausnehmungen (6) und wobei die zweite Oberflächenprofilierung (5) durch im wesentlichen U-förmige, auf der der Welle (3) abgewandten Seite offene Ausnehmungen (11) gebildet ist, die einander mit axialem Abstand benachbart zugeordnet sind, **dadurch gekennzeichnet, daß** die erste Begrenzungsfläche (7) in zwei ebenen Teilflächen (7.1, 7.2) unterteilt ist und daß die Teilflächen (7.1, 7.2) mit der abzudichtenden Welle (3) voneinander abweichende Winkel (8.1, 8.3) einschließen und dass der erste, der Welle nähergelegene Winkel (8.1) kleiner als der zweite Winkel (8.3) ist.

2. Radialwellendichtring nach Anspruch 1, **dadurch gekennzeichnet, daß** der Winkel (8.1) 15° und der Winkel (8.2) 32° beträgt.

3. Radialwellendichtring nach einem der Ansprüche 1 oder 2, **dadurch gekennzeichnet, daß** die Dichtscheibe (1) aus PTFE besteht.

4. Radialwellendichtring nach einem der Ansprüche 1 oder 2, **dadurch gekennzeichnet, daß** die Dichtscheibe aus spritzgießbaren Copolymerisaten besteht.

## Claims

1. Radial shaft sealing ring with a sealing disc (1) of polymer material, which, radially on the inner side, is made to protrude axially in the direction of a space (2) to be sealed and circumferentially encloses in a sealing manner a shaft (3) that is to be sealed, the sealing disc (1) having a first surface profiling (4) on the side facing the shaft (3) and a second surface profiling (5) on the side facing away from the shaft (3), the first surface profiling (4) being formed by sawtooth-shaped recesses (6), which are spaced axially apart adjacently, the first delimiting surfaces (7.1, 7.2) of the recesses (6), facing the space (2) that is to be sealed and extending not axially parallel, forming a smaller included angle (8.1, 8.3) with the shaft (3) than the second delimiting surfaces (9) of the recesses (6), facing away from the space (2) that is to be sealed and extending not axially parallel, and the second surface profiling (5) being formed by essentially U-shaped recesses (11) which are open on the side facing away from the shaft (3) and are spaced axially apart adjacently, **characterized in that** the first delimiting surface (7) is subdivided into two planar part-surfaces (7.1, 7.2), and **in that** the part-surfaces (7.1, 7.2) form different included angles (8.1, 8.3) from each other with the shaft (3) that is to be sealed, and **in that** the first angle (8.1), lying closer to the shaft, is smaller than the second angle (8.3).

2. Radial shaft sealing ring according to Claim 1, **characterized in that** the angle (8.1) is 15° and the angle (8.2) is 32°.

3. Radial shaft sealing ring according to either of Claims 1 and 2, **characterized in that** the sealing disc (1) consists of PTFE.

4. Radial shaft sealing ring according to either of Claims 1 and 2, **characterized in that** the sealing disc consists of injection-mouldable copolymers.

## Revendications

1. Joint à lèvre radiale avec une rondelle d'étanchéité (1) en matériau polymère, qui est précintrée radialement à l'intérieur et axialement en direction d'un espace à rendre étanche (2) et qui entoure de façon étanche sur son pourtour un arbre à rendre étanche (3), dans lequel la rondelle d'étanchéité (1) présente sur la face orientée vers l'arbre (3) un premier profilage de surface (4) et sur la face orientée à l'opposé de l'arbre (3) un deuxième profilage de surface (5), dans lequel le premier profilage de surface (4) est formé par des évidements en dents de scie (6), qui sont agencés à proximité l'un de l'autre avec une distance axiale, dans lequel les premières faces de limitation (7.1, 7.2) des évidements (6), orientées vers l'espace à rendre étanche (2) et s'étendant de façon non parallèle à l'axe, forment avec l'arbre (3) un angle (8.1, 8.3) plus petit que les deuxièmes faces de limitation (9) des évidements (6), orientées à l'opposé de l'espace à rendre étanche (2) et s'étendant de façon non parallèle à l'axe, et dans lequel le deuxième profilage de surface (5) est formé par des évidements (11) sensiblement en forme de U ouverts vers la face orientée à l'opposé de l'arbre (3), qui sont agencés à proximité l'un de l'autre avec une distance axiale, **caractérisé en ce que** la première face de limitation (7) est divisée en deux faces partielles planes (7.1, 7.2), **en ce que** les faces partielles (7.1, 7.2) forment avec l'arbre à rendre étanche (3) des angles (8.1, 8.3) différents l'un de l'autre et **en ce que** le premier angle (8.1), situé plus près de l'arbre, est plus petit que le deuxième angle (8.3).

2. Joint à lèvre radiale selon la revendication 1, **caractérisé en ce que** l'angle (8.1) vaut 15° et l'angle (8.2) vaut 32°.

3. Joint à lèvre radiale selon la revendication 1 ou 2, **caractérisé en ce que** la rondelle d'étanchéité (1) est constituée de PTFE.

4. Joint à lèvre radiale selon la revendication 1 ou 2, **caractérisé en ce que** la rondelle d'étanchéité est constituée de copolymérisats moulables par injection.
